Europäisches Patentamt

European Patent Office

Office européen des brevets

(19)

(11) **EP 0 611 171 B1**

(12) **FASCICULE DE BREVET EUROPEEN**

(45) Date de publication et mention
de la délivrance du brevet:
**25.03.1998 Bulletin 1998/13**

(51) Int Cl.$^6$: **G06F 11/16**

(21) Numéro de dépôt: **94400025.6**

(22) Date de dépôt: **05.01.1994**

(54) **Système de synchronisation de tâches redondantes**

Synchronisationssystem für redundante Aufträge

Synchronization system for redundant tasks

(84) Etats contractants désignés:
**BE CH DE ES FR GB IT LI SE**

(30) Priorité: **08.01.1993 FR 9300147**

(43) Date de publication de la demande:
**17.08.1994 Bulletin 1994/33**

(73) Titulaire: **ALCATEL ALSTHOM COMPAGNIE GENERALE D'ELECTRICITE**
**75008 Paris (FR)**

(72) Inventeur: **Herz, Dominique**
**F-94240 L'Hay les Roses (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
**EP-A- 0 445 954**        **US-A- 5 168 443**

- **COMPUTER, vol.23, no.10, Octobre 1990, LOS ALAMITOS pages 33 - 42 K. G. SHIN ET AL. 'Fault-tolerant clock synchronization in distributed systems'**

**Description**

L'invention porte sur un procédé de fonctionnement d'un système de traitement de données adapté pour exécuter en parallèle deux ou plusieurs tâches redondantes réceptrices de données identiques, dans lequel des messages, incluant chacun de telles données et une estampille temporelle, sont transférés aux tâches redondantes, les messages transférés à chaque tâche redondante étant ordonnés selon un ordre chronologique pour être traités par la tâche redondante selon cet ordre et une date de stabilité est déterminée pour chaque message, cette date de stabilité définissant l'instant à partir duquel la tâche redondante peut traiter le message.

L'invention s'applique plus particulièrement à la synchronisation de tâches redondantes résidant dans des calculateurs de contrôle d'automatisme (niveau 1 du modèle CIM) d'une installation de contrôle/commande industriel.

La redondance active sur les entrées de tâches redondantes (dupliquées dans des processeurs différents) est une technique connue pour mettre en oeuvre des procédures de tolérance aux fautes. Les tâches redondantes prennent en entrée les mêmes données et exécutent le même programme de manière qu'une commutation de la sortie des tâches redondantes est possible en cas de défaillance de l'une de celles-ci. On ne considère ici que des tâches redondantes ne réagissant qu'aux données d'entrée (qui sont généralement fournies par des tâches émettrices de telles données qui résident dans d'autres processeurs). Pour avoir une redondance active, il est nécessaire que les tâches redondantes aient le même comportement. Ceci est obtenu en s'arrangeant de manière que les tâches redondantes prennent leurs données d'entrée dans le même ordre chronologique, c'est-à-dire soient synchronisées.

On connaît du document "ACM Computing Surveys -Vol. 22 - N°4 - Dec 1990, pages 299 à 319: Implementing Fault-Tolerant Services Using State Machine Approach: A tutorial of F. Schneider", un système de synchronisation de tâches redondantes dans lequel l'estampille temporelle incluse dans chaque message est constituée par une date d'envoi du message. Cette date d'envoi est donnée classiquement par une horloge du processeur dans lequel réside la tâche émettrice du message. Les granularités des horloges des processeurs (des tâches émettrices de messages) sont suffisamment petites pour qu'en aucun cas, deux messages produits en sortie du même processeur aient la même estampille temporelle. Les processeurs dans lesquels résident les tâches redondantes ont eux aussi une horloge locale et les horloges de tous les processeurs sont éventuellement resynchronisées, comme cela est bien connu, en vue de maintenir une référence de temps identique d'un processeur à l'autre. Le document "Fault-Tolerant Clock Synchronization in Distributed Systems-COMPUTER-IEEE-Octobre 1990", Vol. 23, N° 10, pages 33 à 42, K.G. Shin et al., décrit des procédures de synchronisation d'horloges de processeurs.

Le fonctionnement du système de synchronisation de tâches redondantes connu du document "ACM Computing Surveys..." est le suivant.

Une constante de temps unique est déterminée au préalable, à partir de temps de transfert de données mesurés entre chaque tâche émettrice et chaque tâche redondante. La constante de temps est égale au maxima de ces temps de transfert mesurés.

Les messages reçus par un second processeur sont placés dans une file d'attente où ils sont ordonnés selon l'ordre croissant de leur estampille temporelle. Une date de stabilité, pour chaque message est calculée, cette date étant égale au cumul de l'estampille temporelle et de la constante de temps. Un message en entrée d'un processeur est dit stable lorsqu'aucun autre message ayant une estampille inférieure à celle de ce message ne peut plus arriver en entrée du processeur. Par conséquent un message stable est détecté lorsque l'horloge du second processeur donne une date supérieure à la date de stabilité du message. Celui-ci est alors prélevé de la file d'attente et la donnée qu'il contient est fournie à la tâche redondante résidant dans ce second processeur.

Ce processus est effectué de la même façon sur l'autre second processeur.

De cette manière, les tâches redondantes prennent en compte les données qu'elles reçoivent selon une chronologie identique donnée par les estampilles temporelles des messages encapsulant ces données.

Ce système de synchronisation connu présente l'inconvénient suivant.

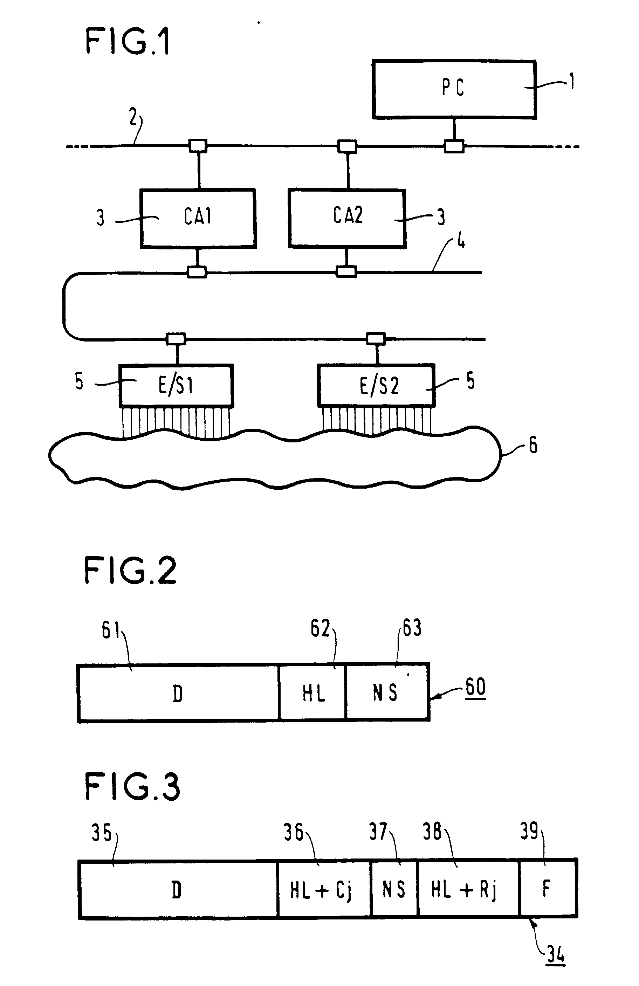

Sur la figure 1, une installation de contrôle/commande est représentée schématiquement et comprend un poste 1 de conduite (PC) (niveau 2 du modèle CIM) relié, au travers d'un réseau 2 de transmission de messages supportant un protocole de communication par exemple apériodique, à des calculateurs de contrôle d'automatisme 3 (CA1,CA2). Les calculateurs de contrôle d'automatisme 3 sont reliés, au travers d'un réseau 4 de transmission de messages supportant un protocole de communication par exemple périodique, à des interfaces 5 déportées (E/S1,E/S2) qui reçoivent des données ou transmettent des données à un procédé physique 6 à contrôler. Généralement, le processus de traitement de données reliant les interfaces déportées aux calculateurs de contrôle d'automatisme est temps réel. Les caractéristiques des réseaux 2 et 4 sont telles que les temps de transmission des messages entre les interfaces déportées 5 et les processeurs 3 sont très inférieurs aux temps de transmission des messages entre le poste 1 de conduite et les calculateurs 3.

Du fait que la constante de temps utilisée pour la détermination de la date de stabilité de chaque message est uniforme pour tous les messages, ceux ci sont retardés en moyenne d'une même valeur de temps. Il en résulte qu'un premier message faisant partie d'un processus de traitement temps réel et ayant un temps de transfert petit (message provenant de l'interface déportée) par rapport à celui d'un second message (message provenant du poste de conduite) peut être retardé d'un temps beaucoup plus important que le second message si le second message bien que reçu après le premier message par le calculateur de contrôle d'automatisme, a une estampille plus petite que celle du premier message. Par conséquent, ce système connu de synchronisation de tâches redondantes est susceptible d'entraîner des dépassements de temps de réponse pour le processus temps réel et n'est donc pas adapté à une telle installation de contrôle/commande.

On connaît aussi du document EP-A-0445954 un système de synchronisation de tâches concurrentes qui est basé sur l'utilisation d'estampilles de temps virtuel (compteurs). Avec ce système connu, on ne tient pas compte des dates de stabilité des messages.

Le but de l'invention est de remédier aux inconvénients précités en vue de privilégier le traitement de certains messages par rapport à d'autres tout en maintenant une parfaite synchronisation de traitement des messages entre les tâches redondantes.

A cet effet, l'invention a pour objet un procédé de fonctionnement d'un système de traitement de données tel que défini par la revendication 1.

De cette façon, il est possible de minimiser les durées d'attente des messages provenant des tâches prioritaires. Ceci se traduit par un ordre de traitement des messages en attente pour une tâche redondante qui est différent de l'ordre chronologique défini par les estampilles des messages. Ceci se traduit aussi, par des dates de stabilité des messages qui sont ajustées en fonction de l'ordre de traitement de ces messages.

Selon un mode de réalisation particulièrement simple, on inclut dans chaque message un code identifiant la source du message qui peut être une tâche émettrice.

Le procédé selon l'invention assure que la durée d'attente des messages provenant des tâches prioritaires est réduite au maximum. Si il n'y a qu'une seule tâche émettrice prioritaire, les messages pour cette tâche ont un temps d'attente nul pour leur traitement par les tâches redondantes. Par ailleurs les temps d'attente des messages pour des tâches émettrices de messages et non prioritaires sont égaux entre eux et réduits au maximum.

Un exemple de réalisation de l'invention est décrit ci-dessous en détail en référence aux dessins.

La figure 1 représente une installation de contrôle/commande.

La figure 2 représente la structure d'un message.

La figure 3 représente un enregistrement dans une file d'attente de messages.

La figure 4 représente sous forme de blocs fonctionnels, le système de synchronisation de tâches selon l'invention pour l'installation de contrôle/commande de la figure 1.

La figure 5 est un organigramme illustrant une manière d'implémenter la détection de messages stables pour le système de synchronisation.

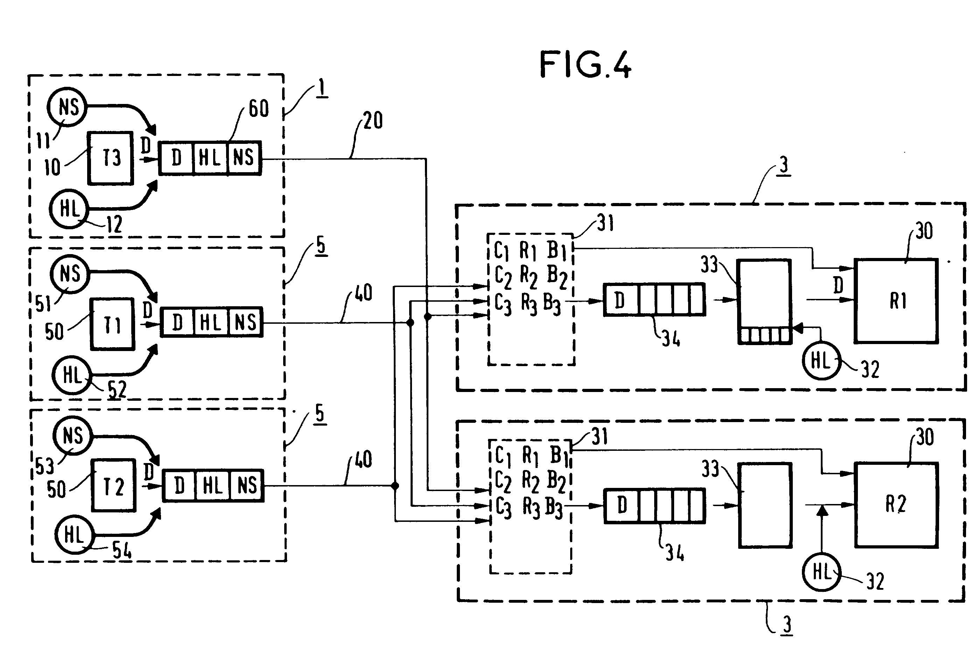

Sur la figure 4, deux tâches T1,T2 émettrices de données D portant la référence 50 résident dans des interfaces déportées 5. Chaque interface déportée 5 est constitué classiquement d'un processeur avec mémoire et équipement périphérique. Elles comportent chacune une horloge locale 52,54.

Une tâche T3 émettrice de données D portant la référence 10 réside dans le poste de conduite 1. Le poste de conduite est constitué d'un processeur avec mémoire et équipement périphérique. Il comporte aussi une horloge locale 12.

Deux tâches redondantes R1,R2 réceptrices des données D fournies par les tâches T1,T2,T3 portent la référence 30 et résident dans les calculateurs de contrôle d'automatisme 3. Chaque calculateur de contrôle d'automatisme 3 est constitué aussi d'un processeur avec mémoire et périphérique. Ils comportent chacun une horloge locale 32.

Le système de synchronisation des tâches R1 et R2 est maintenant décrit.

Il comporte d'abord des tâches interfaces de sortie (non représentées), réparties dans le poste de conduite 1 et les interfaces déportées 5, qui forment des messages 60 en sorties des tâches émettrices de données 10,50.

Ces tâches interfaces de sortie se couplent aux tâches émettrices par l'intermédiaire de files d'entrée/sortie (non représentées) de données pour assurer le passage des données sur les réseaux 2,4 vers les calculateurs 3. De cette façon, la structure et le fonctionnement des tâches émettrices sont indépendants de la synchronisation des tâches redondantes.

Comme représenté sur la figure 2, chaque message 60 comprend une zone 61 de donnée dans laquelle est inscrite une donnée D fournie par une tâche émettrice, une zone 62 dans laquelle est inscrite la date HL constituant une estampille temporelle donnée par une horloge locale 12,52,54 au moment de la formation du message et une zone 63 dans laquelle est inscrit un code d'identification de tâche ou de site NS. Chaque tâche interface de sortie code les messages qu'elle forme selon le protocole de communication adéquat pour les envoyer sur les réseaux 20 et 40.

Selon un exemple de réalisation simple, le code d'identification des messages est une valeur numérique. Par exemple, les messages formés en sortie de la tâche T1 ont un code d'identification égal à 1. Les messages formés en sortie de la tâche T2 ont un code d'identification égal à 2 et les messages formés en sortie de la tâche T3 ont un code d'identification égal à 3. De cette manière, les messages 60 peuvent être différenciés facilement en fonction de leurs origines respectives.

Le système de synchronisation des tâches redondantes R1,R2 comprend ensuite des tâches interfaces d'entrée réparties dans les calculateurs 3. Chaque tâche interface d'entrée a pour fonction de saisir les messages 60 reçus par un calculateur 3, retarder éventuellement les messages reçus dans une file d'attente 33 et fournir les données encapsulés dans les messages à la tâche redondante 30 quand les messages sont stables.

Par la suite, le mode de fonctionnement du système de synchronisation sera décrit en faisant référence uniquement à une tâche interface d'entrée pour une tâche redondante 30 résidant dans un calculateur 3.

Cette tâche interface d'entrée exploite des constantes de temps précalculées et enregistrées en mémoire ou calculées en ligne dans le calculateur 3 pour déterminer la date de stabilité des messages et l'ordre de prise en compte des données fournies à la tâche redondante 30.

Pour déterminer ces constantes de temps, il est nécessaire de mesurer d'abord les temps de transfert minima et maxima d'une donnée D entre chaque tâche émettrice 10,50 et la tâche redondante 30. Dans le cas présent, $m_1,m_2,m_3$ sont les temps de transfert minima d'une donnée D entre les tâches T1,T2,T3 et la tâche R1. $M_1,M_2,M_3$ sont les temps de transfert maxima d'une données D entre les tâches T1,T2,T3 et la tâche R1. Un temps de transfert est égal à la différence entre la date locale de réception d'une données par une tâche 30 dans un processeur 3 et la date locale d'émission de cette donnée par une tâche 10,50 dans un processeur 1,5.

Dans l'exemple de réalisation de l'invention, il est souhaitable de privilégier les messages provenant des interfaces déportées 5 par rapport à ceux provenant du poste de conduite 1. Les tâches T1,T2 sont donc des tâches prioritaires.

On détermine ensuite des premières constantes de temps $C_1,C_2,C_3$ respectivement pour les tâches T1,T2,T3 à partir des relations suivantes, où M est égal à 2 et N est égal à 3.

$$C_j = \underset{k=j}{moy_k} - \underset{k\to M+1,N}{\min(moy_k)} - \underset{k\to 1,M}{\max(diff_k)} - \underset{k\to M+1,N}{\max(diff_k)} \quad pour\ j\to 1,M$$

$$C_j = \underset{k=j}{moy_k} - \underset{k\to M+1,N}{\min(moy_k)} \quad pour\ j\to M+1,N$$

$$si\ \underset{k\to 1,M}{\min(moy_k)} - \underset{k\to M+1,N}{\min(moy_k)} - \underset{k\to 1,M}{\max(diff_k)} - \underset{k\to M+1,N}{\max(diff_k)} >= 0$$

et

$$C_j = \underset{k=j}{moy_k} - \underset{k\to 1,M}{\min(moy_k)} \quad pour\ j\to 1,M$$

$$C_j = \underset{k=j}{moy_k} - \underset{k\to 1,M}{\min(moy_k)} + \underset{k\to 1,M}{\max(diff_k)} + \underset{k\to M+1,N}{\max(diff_k)} \quad pour\ j\to M+1,N$$

$$si\ \underset{k\to 1,M}{\min(moy_k)} - \underset{k\to M+1,N}{\min(moy_k)} - \underset{k\to 1,M}{\max(diff_k)} - \underset{k\to M+1,N}{\max(diff_k)} < 0$$

où

$moy_k = (m_k+M_k)/2$ pour $k\to 1,N$
$diff_k = (M_k-m_k)/2$ pour $k\to 1,N$.

On détermine ensuite des secondes constantes de temps $R_1,R_2,R_3$ respectivement pour les tâches $T_1,T_2,T_3$ à partir de la relation suivante, dans laquelle les indices i et j vont de 1 à 3.

$$R_i = \max(M_j - C_j) + C_i\ , j\#i$$

De préférence, les constantes de temps C1,C2,C3 et R1,R2,R3 sont préalablement enregistrées dans le calculateur 3 pour être récupérées sélectivement à partir d'un code d'identification. En variante, les valeurs $m_k$ et $M_k$ des temps de transfert mesurés sont enregistrées dans le calculateur 3 pour être récupérées sélectivement à partir d'un code d'identification, le calcul des constantes de temps C et R se faisant en ligne.

En réponse aux messages 60 reçus en entrée du calculateur 3, la tâche interface d'entrée décode ces messages et forme des enregistrements 34 qui sont maintenus en attente dans une file d'attente 33. Chaque enregistrement 34, comme visible en figure 3, comporte un champ 35 dans lequel est inscrit la donnée D d'un message, un champ 36 dans lequel est inscrite l'estampille HL du message augmentée de la constante Cj dont l'indice j correspond ou est égal au code d'identification NS du message, un champ 37 dans lequel est inscrit le code d'identification NS du message, un champ 38 dans lequel est inscrite la valeur d'estampille HL du message augmentée de la constante de temps $R_j$ dont l'indice j correspond ou est égal au code d'identification NS du message, et un champ 39 dans lequel est inscrite une variable booléenne de contrôle F positionnée à "Faux".

La valeur du champ 38 d'un enregistrement correspond à la date de stabilité d'un message.

Par ailleurs des constantes booléennes B sont enregistrées dans le calculateur 3 en correspondance avec les codes d'identification. Pour un code d'identification i, la valeur de la constante booléenne est "Vrai" si:

$$\max(M_j - C_j) - (m_i - C_i) > 0 \text{ pour } j\#i$$

Dans ce cas, l'expression $\max(M_j - C_j)) (m_i - C_i)$ donne le temps d'attente maximal d'une donnée d'un message en attente d'être stable. Dans le cas contraire, ce temps d'attente est nul.

Ces constantes booléennes seront exploitées pour éviter de maintenir en attente les messages qui sont stables en entrée du processeur 3.

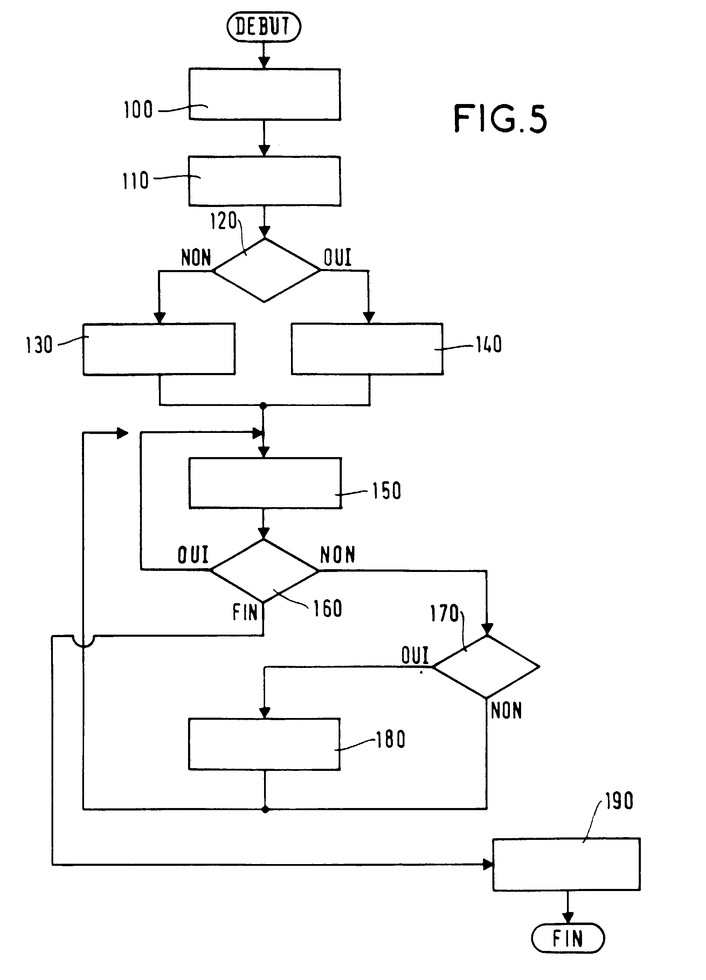

Le fonctionnement de la tâche interface d'entrée est maintenant décrit en référence à la figure 5.

Les messages 60 transitant par les réseaux 2 et 4 sont reçus en séquence en entrée du calculateur de contrôle d'automatisme 3 par la tâche interface d'entrée.

Un message 60 reçu est décodé en 100 pour récupérer la donnée D, l'estampille HL et le code d'identification NS du message.

A partir du code d'identification NS, les constantes de temps Cj,Rj et la constante booléenne Bj dont l'indice j correspond au code d'identification NS sont récupérées en 110.

La constante booléenne Bj est comparée à la valeur "Vrai" en 120. Si elle n'est pas égale à "Vrai", la donnée D du message reçu est fournie directement à la tâche redondante R1 en 130 puisque ce message est stable. Dans le cas contraire, un enregistrement 34 est formé à partir du message 60 en 140 et est placé dans la file d'attente 33 de façon à ce que les enregistrements 34 soient ordonnés selon l'ordre croissant des valeurs de champ 36. Si deux enregistrements consécutifs dans la file d'attente 33 ont la même valeur de champ 36, celui ayant la plus faible valeur de champ 37 précède l'autre dans la file d'attente.

Après les étapes 130 et 140, les enregistrements 34 dans la file d'attente 33 sont balayés en 150. Pour chaque enregistrement 34 balayé, la variable de contrôle F dans le champ 39 est comparée à la valeur "Vrai" en 160. Si cette variable de contrôle est égale à "Vrai", le traitement continue en 150 pour l'enregistrement 34 suivant jusqu'à ce que tous les enregistrements aient été balayés. Dans le cas contraire, la date de stabilité dans le champ 38 pour l'enregistrement balayé est comparée en 170 à la date actuelle fournie par l'horloge locale 32 du calculateur de contrôle d'automatisme 3. Si cette date de stabilité est inférieure à la date actuelle, la variable de contrôle F du champ 39 est positionnée à "Vrai" en 180 et le traitement continue en 150 et sinon en 150. Quand tous les enregistrements 34 ont été balayés dans la file d'attente 33, le traitement se poursuit en 190. Dans cette étape, si le premier enregistrement 34 de la file d'attente 33 (celui ayant un champ 36 de plus faible valeur) a une variable de contrôle F égale à "Vrai", une première donnée D dans le champ 35 de cet enregistrement est fournie à la tâche R1. L'enregistrement est simultanément enlevé de la file d'attente qui est réorganisée en conséquence. Si de nouveau la variable de contrôle F du premier enregistrement de la file d'attente est égale à "Vrai", une seconde donnée D dans le champ 35 de cet enregistrement est fournie à la tâche R1 qui la prendra en compte après la première donnée D. Cette procédure est répétée jusqu'à ce que la variable F soit égale à "Faux", auquel cas le traitement est terminé.

Les étapes 100 à 190 sont répétées pour chaque nouveau message 60 reçu en entrée pour ce calculateur de contrôle d'automatisme. La tâche interface d'entrée ci-dessus décrite fonctionne de la même façon pour l'autre tâche redondante résidant dans l'autre calculateur de contrôle d'automatisme, les constantes de temps devant seulement être adaptées aux temps de transfert de données pour ce calculateur. L'invention peut par conséquent s'appliquer facilement à un nombre de calculateurs de contrôle d'automatisme et de tâches redondantes supérieur à 2.

## Revendications

1. Un procédé de fonctionnement d'un système de traitement de données adapté pour exécuter en parallèle deux ou plusieurs tâches redondantes (30) réceptrices de données identiques, dans lequel des messages (60) incluant chacun de telles données et une estampille temporelle (62) sont transférés aux tâches redondantes par des tâches émettrices auxquelles sont affectées des priorités de niveaux différents, ces tâches émettrices comprenant des tâches émettrices $T_1, T_2, .. T_M$ ayant une priorité de haut niveau et des tâches émettrices $T_{M+1}, .. T_N$ ayant une priorité de plus bas niveau, les messages transférés à chaque tâche redondante étant ordonnés selon un ordre chronologique pour être traités par la tâche redondante selon cet ordre et une date de stabilité étant déterminée pour chaque message, cette date de stabilité définissant l'instant à partir duquel la tâche redondante peut traiter le message, <u>caractérisé</u> en ce que l'ordonnancement des messages transférés à une tâche redondante est basé sur les estampilles temporelles des messages augmentées respectivement de premières constantes de temps Cj et les dates de stabilité des messages sont déterminées sur la base des estampilles de ces messages augmentées respectivement de secondes constantes de temps Rj,

en ce que les premières constantes de temps Cj sont calculées à partir des relations suivantes :

$$
\begin{array}{l}
\texttt{C}_\texttt{j} \texttt{=moy}_{\texttt{k, k=j}} - \min_{\texttt{k->M+1,N}}(\texttt{moy}_\texttt{k}) - \max_{\texttt{k->1,M}}(\texttt{diff}_\texttt{k}) - \max_{\texttt{k->M+1,N}}(\texttt{diff}_\texttt{k}) \texttt{ pour j->1,M}
\end{array}
$$

$$
\texttt{C}_\texttt{j} \texttt{=moy}_{\texttt{k, k=j}} - \min_{\texttt{k->M+1,N}}(\texttt{moy}_\texttt{k}) \texttt{ pour j->M+1,N}
$$

$$
\texttt{si } \min_{\texttt{k->1,M}}(\texttt{moy}_\texttt{k}) - \min_{\texttt{k->M+1,N}}(\texttt{moy}_\texttt{k}) - \max_{\texttt{k->1,M}}(\texttt{diff}_\texttt{k}) - \max_{\texttt{k->M+1,N}}(\texttt{diff}_\texttt{k}) \texttt{ >=0}
$$

et

$$
\texttt{C}_\texttt{j} \texttt{= moy}_{\texttt{k, k=j}} - \min_{\texttt{k->1,M}}(\texttt{moy}_\texttt{k}) \texttt{ pour j->1,M}
$$

$$
\texttt{C}_\texttt{j} \texttt{=moy}_{\texttt{k, k=j}} - \min_{\texttt{k->1,M}}(\texttt{moy}_\texttt{k}) + \max_{\texttt{k->1,M}}(\texttt{diff}_\texttt{k}) + \max_{\texttt{k->M+1,N}}(\texttt{diff}_\texttt{k}) \texttt{ pour j->M+1,N}
$$

$$
\texttt{si } \min_{\texttt{k->1,M}}(\texttt{moy}_\texttt{k}) - \min_{\texttt{k->M+1,N}}(\texttt{moy}_\texttt{k}) - \max_{\texttt{k->1,M}}(\texttt{diff}_\texttt{k}) - \max_{\texttt{k->M+1,N}}(\texttt{diff}_\texttt{k}) \texttt{ <0}
$$

où

$moy_k = (m_k + M_k)/2$ pour $k \rightarrow 1, N$
$diff_k = (M_k - m_k)/2$ pour $k \rightarrow 1, N$

et en ce que les secondes constantes de temps Rj sont calculées à partir des relations suivantes (l'indice j allant de 1 à N) :

$$
R_j = \max (M_k - C_k) + C_j \text{ pour } k \# j
$$

où $m_k$ et $M_k$ représentent respectivement des temps de transfert minima et maxima d'une donnée mesurés préalablement entre chaque tâche émettrice $T_k$ et une tâche redondante.

**2.** Le procédé selon la revendication 1, dans lequel les premières et secondes constantes de temps sont calculées préalablement au transfert de messages des tâches émettrices vers les tâches redondantes et dans lequel chaque message comporte un code (63) qui identifie la tâche émettrice de ce message en vue de récupérer pour ce message à partir dudit code, la première et la seconde constante de temps correspondant à cette tâche émettrice.

**Patentansprüche**

1. Verfahren für den Betrieb eines Datenverarbeitungssystems, das dafür angepaßt ist, parallel zwei oder mehrere redundante Tasks (30) auszuführen, welche identische Daten empfangen, bei dem die Nachrichten (60), die jeweils solche Daten und eine Zeitmarke (62) enthalten, zu den redundanten Tasks von sendenden Tasks übertragen werden, denen Prioritäten unterschiedlicher Ebene zugeordnet sind, wobei diese sendenden Tasks sendende Tasks $T_1$, $T_2$,..$T_M$ mit einer Priorität hoher Ebene und sendende Tasks $T_{M+1}$,..$T_N$ mit einer Priorität niedrigerer Ebene umfassen, wobei die zu jedem redundanten Task übertragenen Nachrichten gemäß einer chronologischen Reihenfolge angeordnet werden, um entsprechend dieser Reihenfolge von dem redundanten Task verarbeitet zu werden, und für jede Nachricht ein Stabilitätszeitpunkt bestimmt wird, wobei dieser Stabilitätszeitpunkt den Zeitpunkt definiert, ab dem der redundante Task die Nachricht verarbeiten kann, dadurch <u>gekennzeichnet,</u>

   daß die Reihenfolge der zu einem redundanten Task übertragenen Nachrichten auf den Zeitmarken der Nachrichten, jeweils erhöht um erste Zeitkonstanten $C_j$, basiert und die Stabilitätszeitpunkte der Nachrichten auf der Basis der Zeitmarken dieser Nachrichten, jeweils erhöht um zweite Zeitkonstanten $R_j$, bestimmt werden,

   daß die ersten Zeitkonstanten $C_j$ anhand der folgenden Beziehungen berechnet werden:

$$C_j = moy_{k, \, k=j} - \min_{k \to M+1, N}(moy_k) - \max_{k \to 1, M}(diff_k) - \max_{k \to M+1, N}(diff_k) \quad \text{für} \quad j \to 1, M$$

$$C_j = moy_{k, \, k=j} - \min_{k \to M+1, N}(moy_k) \quad \text{für} \quad j \to M+1, N$$

$$\text{wenn} \quad \min_{k \to 1, M}(moy_k) - \min_{k \to M+1, N}(moy_k) - \max_{k \to 1, M}(diff_k) - \max_{k \to M+1, N}(diff_k) \geq 0$$

und

$$C_j = moy_{k, \, k=j} - \min_{k \to 1, M}(moy_k) \quad \text{für} \quad j \to 1, M$$

$$C_j = moy_{k, \, k=j} - \min_{k \to 1, M}(moy_k) + \max_{k \to 1, M}(diff_k) + \max_{k \to M+1, N}(diff_k) \quad \text{für} \quad j \to M+1, N$$

$$\text{wenn} \quad \min_{k \to 1, M}(moy_k) - \min_{k \to M+1, N}(moy_k) - \max_{k \to 1, M}(diff_k) - \max_{k \to M+1, N}(diff_k) < 0$$

   wobei

   $moy_k = (m_k + M_k)/2$ für $k \to 1, N$
   $diff_k = (M_k - m_k)/2$ für $k \to 1, N$.

   und daß die zweiten Zeitkonstanten $R_j$ anhand der folgenden Beziehungen berechnet werden (wobei der Index j von 1 bis N reicht):

$$R_j = \max(M_k - C_k) + C_j, \text{ für } k \neq j$$

   wobei $m_k$ und $M_k$ die minimalen bzw. maximalen Übertragungszeiten eines Datums repräsentieren, die zuvor zwischen jedem sendenden Task $T_k$ und einem redundanten Task gemessen wurden.

2. Verfahren nach Anspruch 1, bei dem die ersten und zweiten Zeitkonstanten vor der Nachrichtenübertragung von den sendenden Tasks zu den redundanten Tasks berechnet werden und bei dem jede Nachricht einen Code (63) enthält, der den sendenden Task dieser Nachricht identifiziert, um für diese Nachricht anhand des Codes die erste und die zweite Zeitkonstante, die diesem sendenden Task entspricht, rückzugewinnen.

**Claims**

1. A method of operating a data processing system adapted for running two or more identical-data-receiving replicated tasks (30) in parallel, in which method messages (60) each including such data and a time stamp (62) are transferred to the replicated tasks by transmitter tasks to which different-level priorities are assigned, the transmitter tasks comprising transmitter tasks $T_1$, $T_2$, ..., $T_M$ having high level priorities and transmitter tasks $T_{M+1}$; ..., $T_N$ having lower level priorities, the messages transferred to each replicated task being sequenced in chronological order so as to be processed by the replicated task in that order, and a stability time being determined for each message, which stability time defines the instant from which the replicated task may process the message, said method being characterized in that the sequencing of the messages transferred to a replicated task is based on the message time stamps plus respective first time constants $C_j$, and the stability times of the messages are determined on the basis of the message stamps plus respective second time constants $R_j$,
and in that the first time constants $C_j$ are calculated on the basis of the following relationships:

$$Cj=av_k,k=j- \min_{k \to M+1,N}(av_k)- \max_{k \to 1,M}(diff_k)- \max_{k \to M+1,N}(diff_k) \text{ for } j \to 1,M$$

$$Cj=av_k,k=j- \min_{k \to M+1,N}(av_k) \text{ for } j \to M+1,N$$

$$\text{if } \min_{k \to 1,M}(av_k)- \min_{k \to M+1,N}(av_k)- \max_{k \to 1,M}(diff_k)- \max_{k \to M+1,N}(diff_k) \ge 0$$

and

$$Cj=av_k,k=j- \min_{k \to 1,M}(av_k) \text{ for } j \to 1,M$$

$$Cj=av_k,k=j- \min_{k \to 1,M}(av_k)+ \max_{k \to 1,M}(diff_k)+ \max_{k \to M+1,N}(diff_k) \text{ for } j \to M+1,N$$

$$\text{if } \min_{k \to 1,M}(av_k)- \min_{k \to M+1,N}(av_k)- \max_{k \to 1,M}(diff_k)- \max_{k \to M+1,N}(diff_k) < 0$$

where

$av_k= (m_k+M_k)/2$ for $k \to 1,N$
$diff_k= (M_k-m_k)/2$ for $k \to 1,N$

and in that the second time constants $R_j$ are calculated on the basis of the following relationship, (the index j ranging from 1 to N):

$$R_j = \max (M_k - C_k) + C_j, \text{ for } k \ne j.$$

where $m_k$ and $M_k$ respectively represent the minimum and the maximum transfer time required for a pre-measured item of data to be transferred from each transmitter task $T_k$ to a replicated task.

2. The method according to claim 1, in which the first and second time constants are calculated prior to the emitting tasks transferring messages to the replicated tasks, and in which each message includes a code (63) which identifies the emitting task of the message so that the first and second time constants corresponding to the emitting task can be recovered for the message on the basis of said code.

# FIG.1

PC — 1

2

CA1 — 3    CA2 — 3

4

E/S1 — 5    E/S2 — 5

6

# FIG.2

61    62    63

| D | HL | N S | — 60 |

# FIG.3

35    36    37    38    39

| D | HL + Cj | N S | HL + Rj | F |

34

FIG.4

EP 0 611 171 B1

FIG.5